# EUROPÄISCHE PATENTSCHRIFT

(11) **EP 3 172 814 B1**
(45) Veröffentlichungstag und Bekanntmachung des Hinweises auf die Patenterteilung: **01.09.2021**
(21) Anmeldenummer: 15749740.5
(22) Anmeldetag: 23.07.2015
(51) Int. Cl.: H02K 1/24, H02K 15/02

(54) **HERSTELLUNGSVERFAHREN FÜR EINEN ROTOR EINER RELUKTANZMASCHINE SOWIE ROTOR FÜR EINE RELUKTANZMASCHINE**
PRODUCTION METHOD FOR A ROTOR OF A RELUCTANCE MACHINE AND ROTOR FOR A RELUCTANCE MACHINE
PROCÉDÉ DE FABRICATION POUR ROTOR DE MACHINE À RÉLUCTANCE ET ROTOR POUR MACHINE À RÉLUCTANCE

(30) Priorität: 23.07.2014 DE 102014214392
(43) Veröffentlichungstag der Anmeldung: 31.05.2017
(73) Patentinhaber: KSB SE & Co. KGaA, 67227 Frankenthal (DE)
(72) Erfinder: GONTERMANN, Daniel, 67227 Frankenthal (DE); SCHAAB, Jochen, 67227 Frankenthal (DE); KÖNEN, Michael, 67227 Frankenthal (DE)
(86) Internationale Anmeldenummer: PCT/EP2015/066830
(87) Internationale Veröffentlichungsnummer: WO 2016/012527

(56) Entgegenhaltungen:
- JP-A- 2002 345 219
- JP-A- 2009 027 852
- JP-B2- 3 486 300

## Beschreibung

Die Erfindung betrifft ein Verfahren zur Herstellung eines Rotors für eine Reluktanz-maschine, insbesondere für eine Synchron-Reluktanzmaschine, wobei das Rotorblechpaket mittels Stanzpaketierung hergestellt wird. Die Erfindung betrifft des Weiteren einen Rotor sowie eine Reluktanzmaschine mit einem derartigen Rotor.

Die JP 2009 027852 A zeigt einen gattungsgemäßen Rotor. Die JP 2002 345219 A und die JP 3 486300 B2 zeigen weitere Synchron-Reluktanzmotoren.

Rotoren für Synchron-Reluktanzmaschinen umfassen üblicherweise ein zylinderförmiges weichmagnetisches Element, das koaxial auf der Rotorachse angeordnet wird. In der Regel wird hierzu ein gestapeltes Blechpaket verwendet. Zur Ausbildung mindestens eines Polpaares bzw. Lückenpaares umfasst der Rotor in Radialrichtung Flussleitsowie Flusssperrabschnitte, die sich voneinander durch eine unterschiedlich stark ausgeprägte magnetische Permeabilität unterscheiden. Der Abschnitt mit großer magnetischer Leitfähigkeit ist als d-Achse des Rotors und der Abschnitt mit vergleichsweise geringer Leitfähigkeit als q-Achse des Rotors definiert.

Das Blechpaket umfasst folglich eine Vielzahl von aufeinander gestapelten Elektroblechen, die die gewünschte Blechschnittgeometrie mit Flussleit- und Flusssperrabschnitten aufweisen.

Bisher werden die einzelnen Blechschnitte für ein Rotorpaket ausgestanzt und gestapelt. Die Fixierung der Blechschnitte erfolgt dann durch Verspannen. Die notwendigen Prozessschritte können wie folgt zusammengefasst werden.
- 1.: Stanzen der Rotorbleche.
- 2.: Einlegen der Endscheiben auf den Fädeldorn.
- 3.: Aufstapeln der einzelnen Bleche auf einen Fädeldorn und Herstellung der Schrägung.
- 4.: Auflegen der oberen Deckscheibe und Pressen des Pakets.
- 5.: Messen der Paketlänge.
- 6.: Aufpressen des Paketes auf die Motorwelle.
- 7.: Sicherung des Paketes durch axialen Sicherungsring.
- 8.: Abdrehen des Rotors auf das Nennmaß.
- 9.: Auswuchten des Rotors durch ein positves oder negatives Wuchtverfahren.

Ein alternatives Herstellungsverfahren wird für die Herstellung von Rotoren für Elektromotoren angewandt, die nicht nach dem Reluktanzprinzip arbeiten. Dazu zählen insbesondere Motoren, die in einer hohen bis sehr hohen Stückzahl laufen oder sehr filigran ausgeführt sind. Bei dem verwendeten Stanzpaketierungsverfahren werden in einem Schritt die notwendigen Bleche aus einem Blechband ausgestanzt und gleichzeitig gestapelt. Zudem werden während des Stanzvorgangs im Stanzwerkzeug in einer Stufe die Verbindungen zwischen den einzelnen Blechen eingebracht. Diese als "Interlocks" bezeichneten Verbindungsstellen können in Form von Paketierungsnasen ausgeführt sein, die in entsprechende Gegenstellen, insbesondere Vertiefungen, des benachbarten Blechpaketes eingreifen und dadurch eine klemmende Verbindung zwischen einzelnen Blechen bilden. Eine weitergehende Funktion kommt diesen Verbindungsstellen bisher nicht zu.

Die Aufgabe der vorliegenden Erfindung beschäftigt sich mit der Optimierung eines Herstellungsverfahrens speziell für Rotoren einer Reluktanzmaschine, die den vorab diskutierten Aufbau mit Flussperr- bzw. Flussleitabschnitten aufweisen.

Gelöst wird diese Aufgabe durch das Herstellungsverfahren mit den Merkmalen des Anspruchs 1. Vorteilhafte Ausgestaltungen des erfindungsgemäßen Verfahrens sind Gegenstand der abhängigen Unteransprüche.

Der erfindungswesentliche Kerngedanke der Erfindung liegt darin, das bereits bekannte Stanzpaketierungsverfahren auch bei der Herstellung eines Rotors für Reluktanzmaschinen anzuwenden. Aus der Kombination dieser beiden Technologien ergeben sich gewisse Vorteile.

Erfindungsgemäß wird während der Stanzpaketierung wenigstens eine Verbindungsstelle erzeugt, die zwei oder mehrere benachbarte Rotorbleche des gestapelten Rotorblechpaketes zusammenhält. Dabei wird die wenigstens eine Verbindungsstelle derart ausgebildet und angeordnet, dass dieser neben der reinen Verbindungsfunktion zugleich eine flusssperrende Wirkung für die Rotorfunktion zukommt. Demnach dient wenigstens eine Flusssperre des Rotors zugleich als Verbindungsstelle zwischen wenigstens zwei benachbarten Blechen des Rotorpaketes. Erfindungsgemäß sind die Flusssperren durch Aussparungen gebildet.

Selbstverständlich können verschiedene Verbindungsstellen mehrere Flusssperren bilden. Denkbar ist es auch, dass alle Flussperren ebenfalls Verbindungsstellen zwischen den Paketen darstellen. Erfindungsgemäß ist jedoch nur eine beschränkte Anzahl an Flusssperren durch ein oder mehrere Verbindungsstellen gebildet.

Der Rotor kann vorzugsweise für eine Synchron-Reluktanzmaschine geeignet sein, insbesondere für einen Reluktanzmotor, besonders bevorzugt für einen Synchron-Reluktanzmotor. Die Anordnung der einzelnen Flussleit- bzw. Flusssperrbereiche kann nach Vorbild des US-Patents von Vagati US 5,818,140 gestaltet sein.

Idealerweise liegt die wenigstens eine Verbindungsstelle, die gleichzeitig eine Flusssperre des Rotors bildet, im Bereich des Flusssperrenabschnittes der Blechschnittgeometrie. Vorzugsweise liegt die wenigstens eine Verbindungstelle auf der q-Achse des Rotors, idealerweise symmetrisch zur q-Achse. Denkbar ist auch eine Anordnung der wenigstens einen Verbindungsstelle in unmittelbarer Nähe zur q-Achse.

Der Rotor selbst kann als Innen- oder Außenläufer ausgeführt sein.

Ein oder mehrere Verbindungsstellen können ein oder mehrere gestanzte Paketiernasen umfassen, die in ein oder mehrere passende Gegenstellen, insbesondere eine Vertiefung, des benachbarten Bleches eingreifen. Hierdurch wird vorzugsweise eine klemmende Verbindung zwischen benachbarten Blechpaketen erzeugt. Die Bleche in den Rotormittellagen umfassen vorzugsweise jeweils Vertiefungen und Paketiernasen. Wenigstens eine Paketiernase bildet dabei wenigstens eine Flusssperre aus.

Erfindungsgemäß werden die in radialer Richtung außenliegenden Flusssperren, idealerweise die auf der q-Achse in radialer Richtung außenliegenden Flusssperren durch Verbindungsstellen ausgebildet. Bei der Verwendung des vorgenannten Vagati-Designs setzt sich das Rotordesign aus insgesamt vier Flusssperrenquadranten zusammen. In diesem Fall ist es zweckmäßig, wenn die in radialer Richtung am äußeren Rotorrand liegenden Flusssperren durch entsprechende Verbindungsstellen des Stanzpaketierungsverfahrens gebildet sind.

Denkbar ist es, dass eine einzelne Flusssperre durch eine einzige große Verbindungsstelle ausgebildet ist. Es besteht jedoch auch die Möglichkeit, dass eine einzige Flusssperre durch eine bestimmte Anzahl an separaten, benachbart angeordneten Verbindungsstellen gebildet ist, diese für sich genommen in Relation zu einer einzigen großen Verbindungsstelle vorzugsweise kleiner sind.

Bei dem eingangs genannten Herstellungsverfahren wurden die notwendigen Endscheiben zum Auswuchten des Rotors verwendet. Insbesondere wurde die Wuchtmasse in der Ringnut der Endscheibe angebracht. Durch die Verwendung des Stanzpaketierungsverfahrens ist eine derart aufwendige Auswuchtung des Rotors nicht mehr notwendig. Das Design der notwendigen Endscheiben des erfindungsgemäßen Rotors kann kleiner ausfallen und es erfolgt bedarfsweise eine optimierte Wuchtung.

Das erfindungsgemäße Verfahren dient insbesondere zur Herstellung eines Rotorblechpakets, das einen Durchmesser von kleiner oder gleich 150 mm aufweist. Zudem kann sich der resultierende Rotor durch eine axiale Länge kleiner oder gleich 200 mm auszeichnen.

Die Erfindung betrifft des Weiteren einen Rotor für eine Reluktanzmaschine, insbesondere für eine Synchron-Reluktanzmaschine, wobei der Rotor ein Blechpaket umfasst, das aus wenigstens zwei Blechschnitten gestapelt ist und wenigstens zwei benachbarte Blechschnitte über wenigstens eine Verbindungsstelle miteinander verbunden sind. Erfindungsgemäß ist wenigstens eine Verbindungsstelle derart dimensioniert und angeordnet, so dass die zugleich als mindestens eine Flusssperre des Rotors dient.

Ein oder mehrere Verbindungsstellen können ein oder mehrere Paketiernasen, insbesondere gestanzte Paketiernasen, umfassen, die in ein oder mehrere passende Gegenstellen, insbesondere eine Vertiefung, des benachbarten Bleches eingreifen. Hierdurch wird vorzugsweise eine klemmende Verbindung zwischen benachbarten Blechpaketen erzeugt.

Wenigstens eine Flusssperre kann durch eine große Verbindungsstelle oder durch eine bestimmte Anzahl benachbarter Verbindungsstellen gebildet sein.

Vorzugsweise ist der erfindungsgemäße Rotor gemäß dem erfindungsgemäßen Verfahren bzw. einer vorteilhaften Ausgestaltung des Verfahrens hergestellt. Die Vorteile und Eigenschaften des erfindungsgemäßen Verfahrens treffen ohne Einschränkung auch auf den erfindungsgemäßen Rotor zu, weshalb an dieser Stelle auf eine wiederholende Beschreibung verzichtet wird.

Neben dem Rotor betrifft das Verfahren zudem eine Reluktanzmaschine, insbesondere eine Synchron-Reluktanzmaschine, besonders bevorzugt einen Synchron-Reluktanzmotor, mit dem erfindungsgemäßen Rotor. Auch bezüglich der Reluktanzmaschine ergeben sich dieselben Vorteile und Eigenschaften, die bereits anhand des erfindungsgemäßen Verfahrens beschrieben wurden.

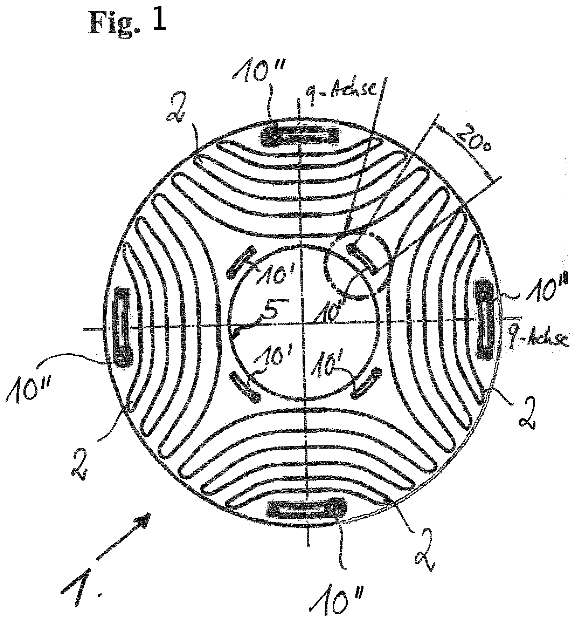

Weitere Vorteile und Eigenschaften der Erfindung werden im Folgenden anhand des in der Figur dargestellten Ausführungsbeispiels erläutert.

Die einzige Figur zeigt einen einzelnen Blechschnitt 1 des erfindungsgemäßen Rotors für einen Reluktanzmotor. Zur Vereinfachung der Darstellung ist der Stator nicht abgebildet. Das gezeigte Rotorblech 1 kann in vier identisch aufgebaute Kreissektoren unterteilt werden, wobei jeder Sektor über mehrere Aussparungen 2 verfügt, die die Funktion von Flusssperren übernehmen. Durch die Anordnung der Flusssperren 2 wird ein vierpoliger Rotor gebildet, dessen magnetischer Fluss in den Bereichen mit Flusssperren 2 gehemmt ist. Die Abschnitte mit hoher magnetischer Leitfähigkeit werden als d-Achse und der Bereich geringerer magnetischer Leitfähigkeit als q-Achse gekennzeichnet.

Für die Rotorherstellung werden mehrere Rotorbleche 1 aus einem zugeführten Blechstreifen gestanzt und im selben Schritt in axialer Rotorachse zu dem resultierenden Blechpaket des Rotors gestapelt. Die Verbindung zwischen den einzelnen Blechschnitten 1 des Blechpaketes erfolgt über sogenannte Stanznasen, die in entsprechende Gegenstellen des darunterliegenden Blechschnittes 1 eingreifen und zwischen den Blechschnitten 1 eine klemmende Verbindung herstellen. Die Verbindungsstellen bewirken eine axialer Fixierung sowie eine drehsteife Verbindung zwischen den Blechschnitten 1.

In der Abbildung zeigt der Blechschnitt 1 insgesamt acht Paketiernasen 10, wobei insgesamt vier Nasen 10' um die Mittelbohrung 5 des Blechschnittes 1 symmetrisch angeordnet sind.

Die außenliegenden Paketiernasen 10" liegen in radialer Richtung am äußeren Rand des Blechschnittes 1 symmetrisch zum Mittelpunkt des Blechschnitts 1 verteilt. Diese Paketiernasen 10" bilden gleichzeitig die außen liegenden Flusssperren der insgesamt vier Flusssperrabschnitte des Blechpaketes.

Bei der erfindungsgemäßen Lösung werden zwei am Markt verfügbare Technologien in vorteilhafter Weise kombiniert und die sich dadurch ergebenden Synergieeffekte ausgenutzt. Zum einen wird die Stanzpaketierung für die Herstellung eines Rotors für eine Reluktanzmaschine eingesetzt, wobei hier die ohnehin vorzusehenden Paketiernasen gleichzeitig als Flusssperren genutzt werden. In diesem Fall werden die äußersten Flusssperren 10" während des Paketierprozesses in das Blech eingebracht.

Die Erfindung bietet eine prozesssichere Herstellung eines Rotorpaketes für eine Reluktanzmaschine. Es wird ein stabiler Halt der einzelnen Blechschnitte 1 eines Blechpaketes erzielt, wodurch sich ein besseres Handling in der Fertigung erreichen lässt. Gegenüber den bisherigen Fertigungsverfahren für Rotoren von Reluktanzmaschinen kommt es nicht mehr zu einem nachteiligen Überdrehen des Blechpaketes. Zudem können die sonst notwendigen Endscheiben entfallen bzw. deutlich kleiner dimensioniert werden, da das aufwendige Auswuchten des Rotors nicht mehr notwendig ist. Die Endscheiben können wesentlich kleiner ausfallen, wodurch ein neues Design mit einer optimierten Wuchtung möglich ist. Auch kann das Auffedern des Paketes vollständig entfallen.

## Patentansprüche

1. Verfahren zur Herstellung eines Rotors für eine Reluktanzmaschine, insbesondere für eine Synchron-Reluktanzmaschine, wobei das Rotorblechpaket Flusssperren (2) aufweist und mittels Stanzpaketierung hergestellt wird, wobei
zwei oder mehrere benachbarte Bleche (1) des Paketes mittels mindestens einer während der Stanzpaketierung erstellten Verbindungsstelle zusammengehalten werden, die gleichzeitig eine Flusssperre (2) des Rotors bildet, **dadurch gekennzeichnet, dass** die Flusssperren (2) durch Aussparungen gebildet sind, dass nur eine beschränkte Anzahl an Flusssperren (2) durch ein oder mehrere Verbindungsstellen gebildet ist, wobei wenigstens eine in radialer Richtung aussen liegende Flusssperre (2) durch mindestens eine Verbindungsstelle gebildet ist, wobei die wenigstens eine Verbindungsstelle eine gestanzte Paketiernase (10, 10', 10") ist, die in eine Vertiefung des benachbarten Bleches eingeführt ist.

2. Verfahren nach Anspruch 1, **dadurch gekennzeichnet, dass** die wenigstens eine Verbindungsstelle, die gleichzeitig eine Flusssperre (2) des Rotors bildet, im Flusssperrenabschnitt der Rotorgeometrie angeordnet ist, vorzugsweise auf oder in unmittelbarer Nähe der q-Achse des Rotors liegt, idealerweise asymmetrisch zur q-Achse.

3. Verfahren nach einem der vorhergehenden Ansprüche, **dadurch gekennzeichnet, dass** eine Flusssperre (2) durch eine einzige Verbindungsstelle oder durch mehrere separate und benachbart angeordnete Verbindungsstellen gebildet ist.

4. Verfahren nach einem der vorhergehenden Ansprüche, **dadurch gekennzeichnet, dass** der Rotor ein Innen- oder Aussenläufer ist.

5. Verfahren nach einem der vorhergehenden Ansprüche, **dadurch gekennzeichnet, dass** das Rotorblechpaket einen Durchmesser kleiner oder gleich 150mm und/oder eine axiale Länge kleiner oder gleich 200mm hat.

6. Rotor für eine Reluktanzmaschine, insbesondere Synchron-Reluktanzmaschine, wobei der Rotor ein Blechpaket mit Flusssperren (2) umfasst, das aus wenigstens zwei Blechschnitten (1) gestapelt ist und wenigstens zwei benachbarte Blechschnitte (1) über wenigstens eine Verbindungsstelle miteinander verbunden sind, wobei die wenigstens eine Verbindungsstelle mindestens eine Flusssperre (2) des Rotors bildet, **dadurch gekennzeichnet, dass** die Flusssperren (2) durch Aussparungen gebildet sind, dass nur eine beschränkte Anzahl an Flusssperren (2) durch ein oder mehrere Verbindungsstellen gebildet ist, wobei wenigstens eine in radialer Richtung aussen liegende Flusssperre (2) durch mindestens eine Verbindungsstelle gebildet ist, wobei die wenigstens eine Verbindungsstelle eine gestanzte Paketiernase (10, 10', 10") ist, die in eine Vertiefung des benachbarten Bleches eingeführt ist.

7. Rotor nach Anspruch 6, hergestellt nach einem Verfahren gemäß einem der Ansprüche 1 bis 5.

8. Reluktanzmaschine, insbesondere Synchron-Reluktanzmaschine, mit einem Rotor gemäß einem der Ansprüche 6 oder 7.

## Claims

1. Method for producing a rotor for a reluctance machine, in particular for a synchronous reluctance machine, wherein the rotor laminate stack has flux barriers (2) and is produced by means of punch-stacking, wherein
two or more adjacent laminates (1) of the stack are held together by means of at least one connection point which is created during the punch-stacking and simultaneously forms a flux barrier (2) of the rotor, **characterized in that** the flux barriers (2) are formed by cutouts, **in that** only a limited number of flux barriers (2) are formed by one or more connection points, wherein at least one flux barrier (2) which is on the outside in the radial direction is formed by at least one connection point, wherein the at least one connection point is a punched stacking lug (10, 10', 10") which is inserted in a recess of the adjacent laminate.

2. Method according to Claim 1, **characterized in that** the at least one connection point which simultaneously forms a flux barrier (2) of the rotor is arranged in the flux barrier portion of the rotor geometry, preferably situated on or in the immediate vicinity of the q-axis of the rotor, ideally asymmetrically with respect to the q-axis.

3. Method according to either of the preceding claims, **characterized in that** a flux barrier (2) is formed by a single connection point or by a plurality of separate and adjacently arranged connection points.

4. Method according to one of the preceding claims, **characterized in that** the rotor is an internal rotor or an external rotor.

5. Method according to one of the preceding claims, **characterized in that** the rotor laminate stack has a diameter of less than or equal to 150 mm and/or an axial length of less than or equal to 200 mm.

6. Rotor for a reluctance machine, in particular a synchronous reluctance machine, wherein the rotor comprises a laminate stack with flux barriers (2), which laminate stack is formed by stacking at least two laminations (1), and at least two adjacent laminations (1) are connected to one another by means of at least one connection point, wherein the at least one connection point forms at least one flux barrier (2) of the rotor, **characterized in that** the flux barriers (2) are formed by cutouts, **in that** only a limited number of flux barriers (2) are formed by one or more connection points, wherein at least one flux barrier (2) which is on the outside in the radial direction is formed by at least one connection point, wherein the at least one connection point is a punched stacking lug (10, 10', 10") which is inserted in a recess of the adjacent laminate.

7. Rotor according to Claim 6, produced by a method according to one of Claims 1 to 5.

8. Reluctance machine, in particular synchronous reluctance machine, with a rotor according to either of Claims 6 and 7.

## Revendications

1. Procédé de fabrication d'un rotor destiné à une machine à réluctance, en particulier une machine à réluctance synchrone, l'empilage de tôles de rotor comportant des barrières anti-flux (2) et étant fabriqué par estampage de tôles empilées, deux tôles adjacentes (1) ou plus de l'empilage étant maintenues ensemble à l'aide d'au moins un point de liaison qui est réalisé lors de l'estampage de tôles empilées et qui forme en même temps une barrière anti-flux (2) du rotor, **caractérisé en ce que** les barrières anti-flux (2) sont formées par des évidements, **en ce que** seul un nombre limité de barrières anti-flux (2) est formé par un ou plusieurs points de liaison, au moins une barrière anti-flux (2), située à l'extérieur dans la direction radiale, étant formée par au moins un point de liaison, l'au moins un point de liaison étant un ergot d'empilage estampé (10, 10', 10") qui est inséré dans une cavité de la tôle adjacente.

2. Procédé selon la revendication 1, **caractérisé en ce que** l'au moins un point de liaison, qui forme en même temps une barrière anti-flux (2) du rotor, est disposé dans la portion de barrière anti-flux de la géométrie de rotor, de préférence sur l'axe q du rotor ou au voisinage immédiat de celui-ci, idéalement asymétriquement par rapport à l'axe q.

3. Procédé selon l'une des revendications précédentes, **caractérisé en ce qu'**une barrière anti-flux (2) est formée par un seul point de liaison ou par plusieurs points de liaison séparés et disposés de manière adjacente.

4. Procédé selon l'une des revendications précédentes, **caractérisé en ce que** le rotor est un induit interne ou externe.

5. Procédé selon l'une des revendications précédentes, **caractérisé en ce que** l'empilage de tôles de rotor a un diamètre inférieur ou égal à 150 mm et/ou une longueur axiale inférieure ou égale à 200 mm.

6. Rotor destiné à une machine à réluctance, en particulier une machine à réluctance synchrone, le rotor comprenant un empilage de tôles pourvu de barrières anti-flux (2) et formé d'au moins deux coupes de tôle (1) empilées et au moins deux coupes de tôle adjacentes (1) étant reliées entre elles par le biais d'au moins un point de liaison, l'au moins un point de liaison formant au moins une barrière anti-flux (2) du rotor, **caractérisé en ce que** les barrières anti-flux (2) sont formées par des évidements, **en ce que** seul un nombre limité de barrières anti-flux (2) est formé par un ou plusieurs points de liaison, au moins une barrière anti-flux (2) située à l'extérieur dans la direction radiale étant formée par au moins un point de liaison, l'au moins un point de liaison étant un ergot d'empilage estampé (10, 10', 10'') qui est inséré dans une cavité de la tôle adjacente.

7. Rotor selon la revendication 6, fabriqué par un procédé selon l'une des revendications 1 à 5.

8. Machine à réluctance, en particulier machine à réluctance synchrone, comprenant un rotor selon l'une des revendications 6 ou 7.
